# EUROPEAN PATENT APPLICATION

(11) **EP 4 316 942 A1**
(43) Date of publication of application: **07.02.2024**
(21) Application number: 22780686.6
(22) Date of filing: 28.03.2022
(51) Int. Cl.: B61H 5/00, F16D 65/12, F16D 65/847

(54) **BRAKE DISC FOR RAILROAD VEHICLE**

(30) Priority: 29.03.2021 JP 2021056027
(71) Applicant: NIPPON STEEL CORPORATION, Chiyoda-ku Tokyo 100-8071 (JP)
(72) Inventor: NOGAMI, Hiroshi, Tokyo 100-8071 (JP); KATO, Takanori, Tokyo 100-8071 (JP); TAMURA, Kenji, Tokyo 100-8071 (JP); MIYABE, Naruo, Tokyo 100-8071 (JP); KANAMORI, Seiji, Nagoya-shi, Aichi 450-6101 (JP); KITAZAWA, Yuzuka, Nagoya-shi, Aichi 450-6101 (JP); KAMIYA, Masahiro, Nagoya-shi, Aichi 450-6101 (JP)
(74) Representative: Zimmermann & Partner Patentanwälte mbB
(86) International application number: PCT/JP2022/014829
(87) International publication number: WO 2022/210475

(57) **Abstract**

A brake disc (100) includes a disc body (10) and fins (20). The disc body (10) decreases in thickness as the disc body extends inward in a radial direction. The fins (20) are radially disposed on a back surface (12) of the disc body (10). At least one of the fins (20) has a bolt hole (22) at a central portion of the fin (20) in the radial direction. The disc body (10) includes projections (13). The projections (13) are formed on a portion of the back surface (12) positioned outward from the bolt hole (22) in the radial direction. The fins (20) each include a top surface (21) and a convex portion (25). The convex portion (25) protrudes inward from an imaginary plane (S 1) in the radial direction. The imaginary plane (S 1) passes an end portion (212) of the top surface (21) and an inner circumferential edge (122) of the back surface (12).

## Description

### TECHNICAL FIELD

The present disclosure relates to a brake disc for a railway vehicle.

### BACKGROUND ART

As a braking device of a railway vehicle, a disc brake is widely used. A disk brake includes an annular brake disc and a brake lining. For example, the brake disc is fastened to a wheel and rotates with the wheel. The brake lining is pressed against the brake disc. Friction between the brake lining and the brake disc makes braking possible for the brake disc and the wheel.

A brake disc used in a railway vehicle that travels at high speed, such as Shinkansen (Japanese bullet train), is required to have sufficient cooling performance (heat dissipation performance) in braking, from the viewpoint of keeping a durability of the brake disc. In particular, when a high-speed railway vehicle travels in a down grade section, braking of the brake disc is performed intermittently. At this time, if a cooling performance of the brake disc is insufficient, the brake disc becomes hot. As a result, a durability of the brake disc may be impaired. Further, the high temperature leads to the thermal expansion of the brake disc, which increases a load on a bolt that fastens the brake disc and the wheel together.

Patent Literature 1 discloses a brake disc for a railway vehicle for improving a cooling performance in braking. In the brake disc, a plurality of fins are radially disposed on a back surface of its disc body. The fins come into contact with a wheel, forming ventilation passages between the disc body and the wheel. When the brake disc rotates together with the wheel, the ventilation passages allow air to pass from an inner circumferential side toward an outer circumferential side of the brake disc. The air cools the brake disc.

In Patent Literature 1, some of the fins have bolt holes. The bolt holes are formed at central portions of the fins in a radial direction of the brake disc. In each of the fins, grooves that extend along a circumferential direction of the brake disc are formed on an outer circumferential side and an inner circumferential side of its bolt hole. The grooves cause pressure losses in air flowing through the ventilation passages between the disc body and the wheel to reduce flow rates of ventilation, thereby reducing aerodynamic noise.

Patent Literature 2 discloses a brake disc that is assumed to be applied to a disc brake for an automobile. The brake disc has a pair of disc bodies (sliding plates) to be attached to an axle and a plurality of fins that are radially disposed between the disc bodies. The fins extend in a radial direction of the brake disc and define ventilation passages together with their adjacent fins and the pair of disc bodies. A disc body of the pair of disc bodies disposed inward in an axle direction has a tapered portion. The tapered portion is formed such that an interval between the disc bodies increases as the tapered portion extends inward in the radial direction of the brake disc. According to Patent Literature 2, the tapered portion increases opening areas of the ventilation passages on an inner circumferential side of the brake disc, decreasing inflow resistances of air against the ventilation passages. Therefore, volumes of airflow in the ventilation passages can be increased, thus increasing a cooling performance of the brake disc.

### CITATION LIST

### PATENT LITERATURE

Patent Literature 1: International Application Publication No. WO2014/038621
Patent Literature 2: Japanese Patent No. 3521266

### SUMMARY OF INVENTION

### TECHNICAL PROBLEM

In the brake disc according to Patent Literature 2, providing the tapered portion in the disc body increases the flow rates of ventilation in the ventilation passages as compared with the case where the disc body has a common, flat ring shape. Improvement of its heat dissipation performance is thus intended. However, a railway vehicle has a heavier vehicle weight and travels faster than an automobile. Therefore, the railway vehicle is required to have a strong braking force. Therefore, a heat load imposed on a brake disc used in a railway vehicle is relatively excessive compared with a brake disc used in an automobile as the brake disc according to Patent Literature 2.

In addition, the fins are radially disposed on the disc body of the brake disc. Intervals between adjacent fins widen from an inner circumferential side toward an outer circumferential side. Accordingly, the disc body lacks heat capacity on its outer circumferential portion. Further, a circumferential speed of the outer circumferential portion of the disc body is higher than a circumferential speed of an inner circumferential portion of the disc body. Thus, a heat input by friction between the disc body and a brake lining becomes high at the outer circumferential portion of the disc body. As a result, the outer circumferential portion of the disc body is thermally disadvantageous.

Accordingly, only the technique according to Patent Literature 2, which is assumed to be applied to an automobile, is insufficient to accelerate cooling of a disc body of a brake disc for a railway vehicle, particularly cooling of an outer circumferential portion of the disc body.

An objective of the present disclosure is to accelerate, in braking of a brake disc for a railway vehicle, cooling of a disc body, particularly cooling of an outer circumferential portion of the disc body, which is thermally disadvantageous.

### SOLUTION TO PROBLEM

A brake disc for a railway vehicle according to the present disclosure includes an annular disc body and a plurality of fins. The disc body has a front surface and a back surface. The disc body decreases in thickness as the disc body extends inward in a radial direction. The plurality of fins are radially disposed on the back surface. At least one of the plurality of fins has a bolt hole at a central portion of the fin in the radial direction of the disc body. The disc body includes a plurality of projections. The plurality of projections are formed on a portion of the back surface positioned outward from the bolt hole in the radial direction. The fins each include a top surface and a convex portion. The top surface extends in the radial direction. The convex portion protrudes inward from an imaginary plane in the radial direction as viewed in a section of the brake disc cut in the radial direction. As viewed in the section, the imaginary plane passes an inner circumferential edge of the back surface and an end portion that is one of both end portions of the top surface, whichever is positioned inward in the radial direction.

### ADVANTAGEOUS EFFECTS OF INVENTION

According to the present disclosure, in braking of a brake disc for a railway vehicle, cooling of a disc body, particularly cooling of an outer circumferential portion of the disc body, which is thermally disadvantageous, can be accelerated.

### BRIEF DESCRIPTION OF DRAWINGS

[FIG. 1] FIG. 1 is a back view of a brake disc for a railway vehicle according to an embodiment.
[FIG. 2] FIG. 2 is a perspective view of an octant part of the brake disc illustrated in FIG. 1.
[FIG. 3] FIG. 3 is a radial sectional view of the brake disc illustrated in FIG. 1.
[FIG. 4] FIG. 4 is a diagram exemplifying a temperature distribution of a typical brake disc in braking.
[FIG. 5] FIG. 5 is a diagram illustrating another brake disc that is to be compared with the brake disc for a railway vehicle according to the embodiment.
[FIG. 6] FIG. 6 is a diagram illustrating another brake disc that is to be compared with the brake disc for a railway vehicle according to the embodiment and is different from the brake disc illustrated in FIG. 5.
[FIG. 7] FIG. 7 is a schematic diagram illustrating radial sections of models used in a thermal-fluid analysis.
[FIG. 8] FIG. 8 is a graph illustrating a relation between a flow rate of ventilation obtained by the thermal-fluid analysis and a heat dissipation performance index for each model.
[FIG. 9] FIG. 9 is a graph illustrating a relation between a radial coordinate of a back surface of a disc body and a heat dissipation performance index for each model.

### DESCRIPTION OF EMBODIMENTS

A brake disc for a railway vehicle according to an embodiment includes an annular disc body and a plurality of fins. The disc body has a front surface and a back surface. The disc body decreases in thickness as the disc body extends inward in a radial direction. The plurality of fins are radially disposed on the back surface. At least one of the plurality of fins has a bolt hole at a central portion of the fin in the radial direction of the disc body. The disc body includes a plurality of projections. The plurality of projections are formed on a portion of the back surface positioned outward from the bolt hole in the radial direction. The fins each include a top surface and a convex portion. The top surface extends in the radial direction. The convex portion protrudes inward from an imaginary plane in the radial direction as viewed in a section of the brake disc cut in the radial direction. As viewed in the section, the imaginary plane passes an inner circumferential edge of the back surface and an end portion that is one of both end portions of the top surface, whichever is positioned inward in the radial direction (first configuration).

In its use, a brake disc for a railway vehicle is fastened to a disc-shaped rotary member (e.g., a wheel) that is fixed to an axle. The brake disc is attached to the rotary member in such a manner that top surfaces of fins of the brake disc come into contact with a side surface of the rotary member. The fins define, together with the disc body and the rotary member, a plurality of ventilation passages that extend in the radial direction of the brake disc. In the first configuration, the disc body decreases in thickness as the disc body extends inward in the radial direction. Thus, the ventilation passages are widely opened on an inner circumferential side of the brake disc. As a result, in braking, a large quantity of air can be caused to flow into the ventilation passages from the openings, and flow rates of ventilation in the ventilation passages can be increased. As a flow rate of ventilation in each ventilation passage is increased, a flow velocity of air at the outer circumferential side of the disc body is also increased. Accordingly, in braking, cooling of the disc body, particularly cooling of an outer circumferential portion of the disc body, which is thermally disadvantageous, can be accelerated.

In the first configuration, the plurality of projections are formed on the back surface of the disc body in the portion outward from the bolt hole of the fin in the radial direction. The projections expand a surface area of the outer circumferential portion of the disc body. In the first configuration, in braking, the flow rate of ventilation in each ventilation passage is increased, which increases the flow velocity of air at the outer circumferential side of the disc body. Thus, thermal boundary layers that are formed on the surfaces of the projections become thinner. Therefore, a heat transfer coefficient of the outer circumferential portion of the disc body can be raised. As a result of these, in braking, cooling of the disc body, particularly cooling of the outer circumferential portion of the disc body, which is thermally disadvantageous, can be further accelerated.

In the case where a brake disc for a railway vehicle lacks heat dissipation performance, an end-point temperature in a temperature rise of the brake disc increases. Thus, a degree of deformation of the brake disc or load stress on a bolt may increase. As a result, there is a possibility that a problem in strength (a problem in durability) may arise in the brake disc. In addition, in the case where the heat dissipation performance of the brake disc is low, the speed of cooling the brake disc after a temperature rise may be low, and thus a time taken to cool the brake disc may become long. Accordingly, such a problem that it is difficult to suppress a speed of a railway vehicle by intermittently repeating braking can arise. In contrast, the brake disc according to the first configuration, the cooling of the disc body, particularly the cooling of the outer circumferential portion of the disc body, which is thermally disadvantageous, is accelerated. Thus, a heat dissipation performance that is required of a brake disc for a railway vehicle can be provided. Therefore, the problems due to the lack of heat dissipation performance can be prevented from arising.

In general, when a brake disc for a railway vehicle excessively rises in temperature in its use, a degree of deformation of the brake disc or load stresses on bolts increase. Thus, there is a possibility that a problem in durability may arise in the brake disc. On the other hand, when braking force is reduced to avoid the excessive rise in temperature of the brake disc, a braking distance of the railway vehicle is elongated. Therefore, it is necessary to provide an appropriate heat capacity to a brake disc for a railway vehicle. Here, if the disc body is simply reduced in thickness as the disc body extends inward in the radial direction, a mass of the brake disc on its inner circumferential side is reduced, and a heat capacity of the brake disc on the inner circumferential side is decreased. As a result, there is a possibility that a localized rise in temperature may occur on the inner circumferential side of the brake disc in braking. However, in the first configuration, volumes of the fins are increased with the convex portions protruding inward in the radial direction, so that the heat capacity of the brake disc on the inner circumferential side is augmented. Therefore, the localized rise in temperature on the inner circumferential side of the brake disc can be avoided. That is, by providing the fins with the convex portions protruding inward in the radial direction, the appropriate heat capacity can be provided to the brake disc. Thus, the rise in temperature of the brake disc can be prevented without unnecessary reduction of the braking force. Therefore, a durability required of a brake disc for a railway vehicle can be kept. In addition, surface areas of the fins can be expanded by the convex portions protruding inward in the radial direction. Thus, an effect of improving a cooling performance of the brake disc can be expected.

The projections may be formed over the entire back surface of the disc body (second configuration).

In the second configuration, the projections are scattered over the entire back surface of the disc body. This expands a surface area of the back surface of the disc body as a whole. Thus, a heat transfer coefficient of the disc body can be raised as a whole. Therefore, the cooling performance of the brake disc can be further improved.

The fin having the bolt hole may include a first groove that traverses the fin. The first groove is disposed outward from the bolt hole in the radial direction (third configuration).

In the third configuration, the first groove disposed outward from the bolt hole in the radial direction of the disc body increases the surface area of the fin on the outer circumferential side of the brake disc. In addition, separation of flows of air occurs at edge portions of the first groove, and thermal boundary layers become thinner. Thus, the heat transfer coefficient is improved on the outer circumferential side of the brake disc. Therefore, the cooling of the outer circumferential portion of the disc body can be further accelerated in braking.

In general, when the flow rates of ventilation in the ventilation passages increase, aerodynamic noise produced when a railway vehicle travels increases. To cope with this, in the third configuration, in the or each fin having the bolt hole, the first groove is formed. Edge portions and wall surfaces of the first groove accelerate the cooling of the outer circumferential portion of the disc body, while causing slight pressure losses in air flowing through the ventilation passages, reducing the flow rates of ventilation. Therefore, occurrence of aerodynamic noise in traveling can be suppressed while the cooling performance of the brake disc is increased.

The fin having the bolt hole may further include a second groove that traverses the fin. The second groove is disposed inward from the bolt hole in the radial direction (fourth configuration).

In the fourth configuration, the second groove disposed inward from the bolt hole in the radial direction of the disc body increases the surface area of the fin also on the inner circumferential side of the brake disc and makes the thermal boundary layers thinner, thus improving the heat transfer coefficient. Accordingly, the cooling performance of the brake disc can be improved as a whole. In addition, both the first groove and the second groove can cause pressure losses in air flowing through the ventilation passages, reducing the flow rates of ventilation. Thus, the occurrence of aerodynamic noise can be suppressed more reliably while the cooling performance of the brake disc is further increased.

The back surface of the disc body is preferably inclined with respect to the front surface in such a manner as to approach the front surface as the back surface extends toward an inner circumferential edge as viewed in a section of the brake disc cut in the radial direction (fifth configuration).

In the fifth configuration, the back surface of the disc body is an inclined surface. This gradually shrinks sectional areas of the ventilation passages formed between the disc body and the rotary member, without a sharp change, as the ventilation passages extend from the inner circumferential side toward the outer circumferential side of the brake disc. Therefore, production of significant pressure losses in air flowing through the ventilation passages can be prevented. As a result, the flow rates of ventilation in the ventilation passages can be kept sufficiently, and the cooling performance of the brake disc can be further improved.

In the fifth configuration, the back surface of the disc body approaching the front surface as the back surface extends toward the inner circumferential edge makes heights of the fins provided on the back surface increase as the fins extend toward the inner circumferential side of the brake disc. That is, the surface areas of the fins are expanded on the inner circumferential side of the brake disc. Therefore, the cooling of the brake disc on the inner circumferential side can be accelerated.

Brake discs for a railway vehicle according to embodiments of the present disclosure will be described below with reference to the drawings. In the drawings, the same or equivalent components will be denoted by the same reference numerals, and description of the parts will not be repeated. The drawings are schematic diagrams for describing primary configurations of the brake discs according to the embodiments. Therefore, detailed shapes, dimensional ratios, and the like of the brake discs illustrated in the drawings may differ from those of an actual brake disc.

### [Configuration of Brake Disc]

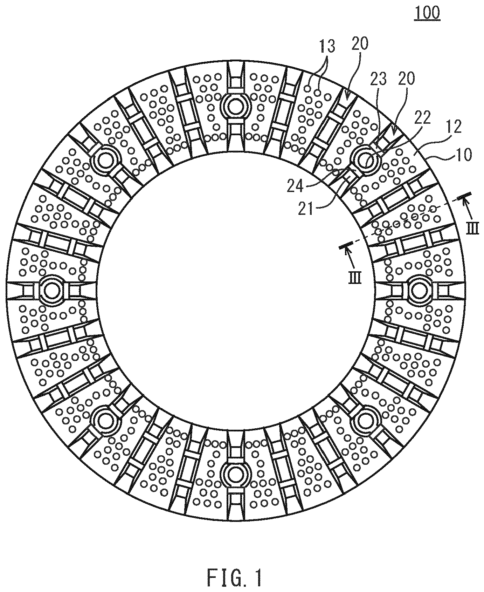

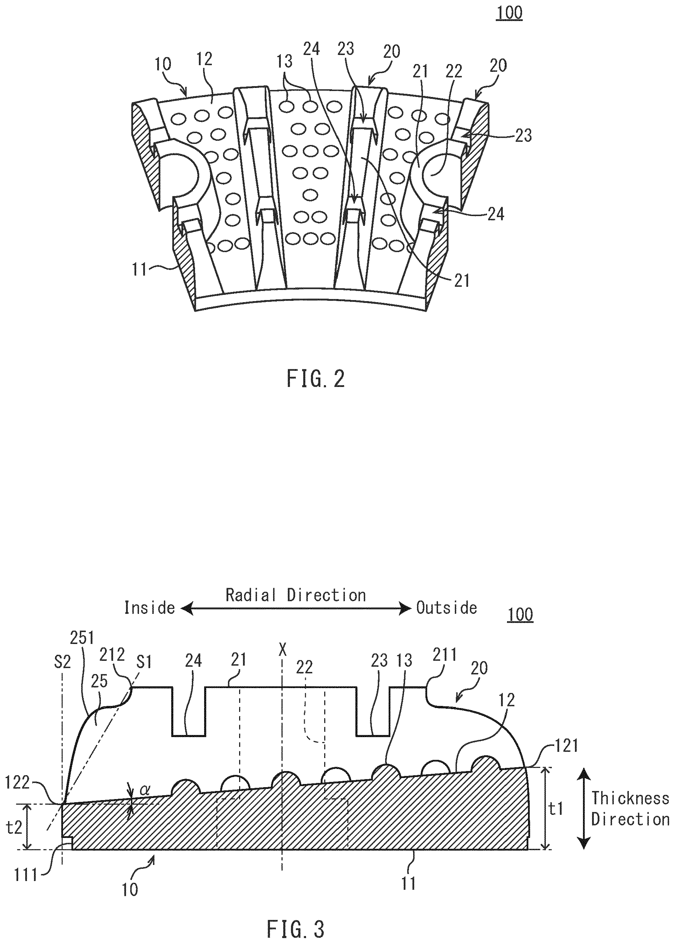

FIG. 1 is a back view of a brake disc 100 for a railway vehicle according to an embodiment. FIG. 2 is a perspective view of an octant part of the brake disc 100 illustrated in FIG. 1. The brake disc 100 is fastened to a rotary member (illustration omitted) of a railway vehicle. The rotary member is an annular disc. The rotary member is fixed to an axle and rotates with the axle. The rotary member is, for example, a wheel.

Referring to FIG. 1 and FIG. 2, the brake disc 100 includes a disc body 10 and a plurality of fins 20.

The disc body 10 is an annular disc. The disc body 10 has a front surface 11 and a back surface 12. The front surface 11 is a sliding surface against which a brake lining (illustration omitted) is to be pressed. The back surface 12 is a surface that faces oppositely to the front surface 11. When the brake disc 100 is fastened to the rotary member, the back surface 12 faces a side surface of the rotary member. Hereinafter, a radial direction and a circumferential direction of the disc body 10 will be simply referred to as a radial direction and a circumferential direction, respectively, and a direction that is perpendicular to both the radial direction and the circumferential direction will be referred to as a thickness direction, for convenience of description.

The disc body 10 includes a plurality of projections 13. The projections 13 are formed on the back surface 12. The projections 13 each have, for example, a hemispherical shape or a hemiellipsoidal shape. Each of the projections 13 may have the same shape as another projection 13 and may have a shape different from a shape of the other projection 13.

The plurality of fins 20 are radially disposed on the back surface 12 of the disc body 10. The fins 20 extend from an inner circumferential side toward an outer circumferential side of the disc body 10. Each of the fins 20 includes a top surface 21 that extends in the radial direction. When the brake disc 100 is fastened to the rotary member, the top surface 21 comes into contact with the side surface of the rotary member. This forms a space surrounded by the rotary member, fins 20 adjacent to each other in the circumferential direction, and the disc body 10. The space serves as a ventilation passage through which air passes when the brake disc 100 rotates with the rotary member.

At least one of the fins 20 has a bolt hole 22 at a central portion of the fin in a radial direction of the disc body. In the example described in the present embodiment, among the plurality of fins 20 disposed on the back surface 12 of the disc body 10, only some fins 20 are provided with bolt holes 22. The bolt holes 22 penetrate the fins 20 and the disc body 10 in the thickness direction. When the brake disc 100 is fastened to the rotary member, bolts (illustration omitted) are inserted through the bolt holes 22.

Each of the fins 20 with the bolt holes 22 has grooves 23 and 24. The grooves 23 and 24 each have a shape that is concave from the top surface 21 toward the disc body 10. The grooves 23 and 24 generally extend in the circumferential direction and traverse the fin 20.

The grooves 23 and 24 are disposed on both sides of the bolt hole 22 in the radial direction. The groove 23 is provided outward from the bolt hole 22 in the radial direction. The groove 24 is provided inward from the bolt hole 22 in the radial direction. The grooves 23 and 24 are not limited to a specific shape. Wall surfaces and bottom surfaces of the grooves 23 and 24 each can be formed as a flat surface, a convex surface, or a concave surface, or a combination thereof. In the present embodiment, fins 20 without bolt holes 22 also have grooves 23 and 24.

With reference to FIG. 3, the configuration of the disc body 10 and the fins 20 will be described in more detail. FIG. 3 is a sectional view of the brake disc 100 illustrated in FIG. 1 taken along the III-III line. That is, FIG. 3 is a sectional view taken by cutting the brake disc 100 along the radial direction. Hereinafter, a section of the brake disc 100 along the radial direction will be referred to as a radial section.

As viewed in a radial section of the brake disc 100, the back surface 12 of the disc body 10 is inclined with respect to the front surface 11. The back surface 12 is inclined in such a manner as to approach the front surface 11 as the back surface 12 extends from an outer circumferential edge 121 toward an inner circumferential edge 122 of the back surface 12. As viewed in a radial section of the brake disc 100, an angle α formed by the back surface 12 with the front surface 11 is preferably 8° or less, more preferably 6° or less. The angle α is preferably 2° or more.

The back surface 12 being inclined with respect to the front surface 11 makes the disc body 10 decrease in thickness as the disc body 10 extends inward in the radial direction. That is, the disc body 10 is gradually made thin as a whole as the disc body 10 extends from an outer side toward an inner side of the disc body 10 in the radial direction. The disc body 10 has a maximum thickness t1 at a position of the outer circumferential edge 121 of the back surface 12. The disc body 10 has a minimum thickness t2 at a position of the inner circumferential edge 122 of the back surface 12.

The maximum thickness t1 is a length from the outer circumferential edge 121 of the back surface 12 to the front surface 11 in the thickness direction. The maximum thickness t1 can be set to, for example, 17 mm to 25 mm.

The minimum thickness t2 is a length from the inner circumferential edge 122 of the back surface 12 to the front surface 11 in the thickness direction. In the present embodiment, a notch portion 111 is provided at an inner circumferential edge of the front surface 11. The minimum thickness t2 is a thickness that is set without consideration given to the notch portion 111. The minimum thickness t2 can be set to, for example, 3 mm to 12 mm.

On the back surface 12 of the disc body 10, a plurality of projections 13 described above are provided for each portion of the back surface 12 between fins 20 adjacent to each other in a circumferential direction. For example, at least five projections 13 are disposed between fins 20 adjacent to each other on the back surface 12.

The plurality of projections 13 are formed in at least a portion of the back surface 12 positioned outward from bolt holes 22 in the radial direction. In the present embodiment, the projections 13 are formed over the entire back surface 12. That is, when the back surface 12 is divided into an outer circumferential side and an inner circumferential side across a center X of the respective bolt holes 22, the plurality of projections 13 are provided ranging from the region of the outer circumferential side to the region of the inner circumferential side.

In the present embodiment, every projection 13 has a hemispherical shape. Note that, with consideration given to formability, it is preferable that projections 13 positioned outward from the bolt holes 22 in the radial direction each have a hemiellipsoidal shape.

The height of each fin 20 is gradually increased as the fin extend from outer side toward inner side of the fin 20 in the radial direction. The height of the fin 20 here means the distance from the back surface 12 of the disc body 10 to the top surface 21 of the fin 20 in the thickness direction. In the present embodiment, while the top surface 21 is substantially parallel to the front surface 11 of the disc body 10, the back surface 12 is inclined with respect to the front surface 11 in such a manner as to approach the front surface 11 as the back surface 12 extends inward in the radial direction. Accordingly, as the top surface 21 extends toward the inner circumferential side of the brake disc 100, the top surface 21 of the fin 20 becomes more distant from the back surface 12 of the disc body 10, thus increasing the height of the fin 20.

Each fin 20 includes a convex portion 25. The convex portion 25 is a portion of the fin 20 that protrudes inward from an imaginary plane S1 in the radial direction. As viewed in a radial section of the brake disc 100, the convex portion 25 is provided between the imaginary plane S1 to an imaginary plane S2. The imaginary plane S1 is an imaginary plane that passes an end portion 212, which is one of both end portions 211 and 212 of the top surface 21, whichever is positioned inward in the radial direction, and the inner circumferential edge 122 of the back surface 12 of the disc body 10. The imaginary plane S2 is an imaginary plane that passes the inner circumferential edge 122 of the back surface 12 and extends in the thickness direction.

The convex portion 25 has a surface 251 that faces inward in the radial direction. In the present embodiment, the surface 251 is constituted by a smoothly curved surface. The surface 251 may be constituted by flat surfaces. In a radial section of the brake disc 100, the surface 251 can be constituted by a plurality of types of curves and/or lines in combination.

### [Effects of Embodiment]

In the brake disc 100 according to the present embodiment, the thickness of the disc body 10 decreases as the disc body 10 extends inward in the radial direction. This expands, on the inner circumferential side of the brake disc 100, sectional areas of ventilation passages that are formed by the rotary member of the railway vehicle, the fins 20 adjacent to each other in the circumferential direction, and the disc body 10. As a result, in braking of the rotary member, quantities of air that flows from the inner circumferential side of the brake disc 100 into the ventilation passages (flow rates of ventilation) can be increased.

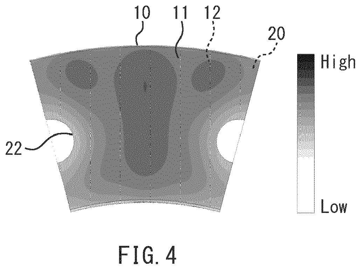

FIG. 4 is a diagram exemplifying a temperature distribution of a typical brake disc in braking. Referring to FIG. 4, during braking of a rotary member, a disc body 10 tends to rise in temperature particularly at a portion of the disc body 10 outward from bolt holes 22 in the radial direction (an outer circumferential portion). This is because fins 20 radially disposed on a back surface 12 cause sectional areas of ventilation passages to expand in the circumferential direction as the ventilation passages extend toward an outer circumferential side of the disc body 10, so that a flow velocity of air decreases at an outer circumferential portion of the disc body 10, thus resulting in a decrease in heat transfer coefficient. In addition, a circumferential speed of the outer circumferential portion of the disc body 10 is high compared with an inner circumferential portion of the disc body 10. Thus, a heat input by friction between the disc body 10 and a brake lining increases, and a temperature rise is likely to occur.

In contrast, in the brake disc 100 according to the present embodiment, the plurality of projections 13 are formed on the back surface 12 of the disc body 10 at least in the portion outward from the bolt holes 22 in the radial direction (outer circumferential portion). With the projections 13, a surface area of the outer circumferential portion of the back surface 12 can be expanded. Further, in the present embodiment, the disc body 10 is reduced in thickness as the disc body 10 extends inward in the radial direction, increasing the flow rates of ventilation in the ventilation passages. Accordingly, the flow velocity of air increases at the outer circumferential portion of the back surface 12, and a thermal boundary layer formed on a surface of each projection 13 becomes thinner. Therefore, a heat transfer coefficient of the outer circumferential portion of the back surface 12 can be raised. Accordingly, the cooling of the disc body 10, particularly the cooling of the outer circumferential portion of the disc body 10, which is thermally disadvantageous, can be accelerated.

In the present embodiment, since the cooling of the outer circumferential portion of the disc body 10, which is particularly likely to rise in temperature, can be accelerated, a cooling performance and a durability of the brake disc 100 can be improved. Such a brake disc 100 can be used for a high-speed railway vehicle.

In the brake disc 100 according to the present embodiment, the thickness of the disc body 10 is gradually reduced as the disc body 10 extends inward in the radial direction. This enables weight reduction of the brake disc 100, allowing energy saving for a railway vehicle in traveling.

In the present embodiment, a volume of the fin 20 is increased with the convex portion 25, on the inner circumferential side of the brake disc 100. As a result, a heat capacity of the brake disc 100 can be kept on the inner circumferential side of the brake disc 100 although the disc body 10 is made thin as a whole as the disc body 10 extends inward in the radial direction. Therefore, the inner circumferential side of the brake disc 100 can be prevented from locally rising in temperature in braking. As a result, a durability of the brake disc 100 required of a brake disc for a railway vehicle can be kept.

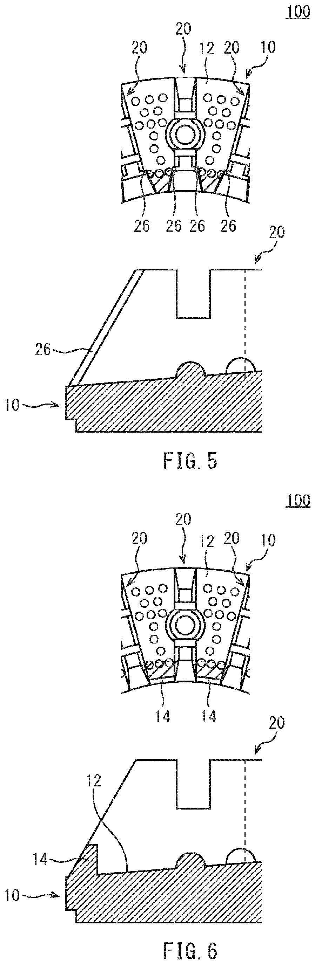

To increase a heat capacity of the brake disc 100 on the inner circumferential side, it is conceivable to make a part or parts of the fins 20 protrude in the circumferential direction on the inner circumferential side of the brake disc 100. For example, as illustrated in FIG. 5, in order simply to increase the heat capacity of the brake disc 100 on the inner circumferential side, it is conceivable to provide projecting portions 26 on both side surfaces of the fins 20 on the inner circumferential side of the brake disc 100. In this case, however, the sectional areas of the ventilation passages are reduced on the inner circumferential side of the brake disc 100 particularly in the circumferential direction. Therefore, the flow rates of ventilation in the ventilation passages are reduced. That is, as illustrated with hatching in the upper part of FIG. 5, air inlet planes of the ventilation passages are shrunk by the projecting portions 26, and ventilation properties between the brake disc 100 and the rotary member are degraded. As a result, the cooling performance of the brake disc 100 is degraded. Further, in the case where the fins 20 are partially made to protrude in the circumferential direction, portions where the sectional areas are sharply expanded are formed in the ventilation passages extending in the radial direction. As a result, pressure losses in air flowing through the ventilation passages increase, reducing the flow rates of ventilation, and flow velocities of the air and heat transfer coefficients decrease.

Alternatively, in order simply to increase the heat capacity of the brake disc 100 on the inner circumferential side, it is also conceivable to provide convex portions 14 on the back surface 12 of the disc body 10 on the inner circumferential side of the brake disc 100, as illustrated in FIG. 6. In this case, however, the sectional areas of the ventilation passages are reduced on the inner circumferential side of the brake disc 100 particularly in the thickness direction. Therefore, the flow rates of ventilation in the ventilation passages are reduced. That is, as illustrated with hatching in the upper part of FIG. 6, air inlet planes of the ventilation passages are shrunk by the convex portions 14, and the ventilation properties between the brake disc 100 and the rotary member are degraded. As a result, the cooling performance of the brake disc 100 is degraded.

In contrast, in the present embodiment, the fins 20 are made to protrude inward in the radial direction to form the convex portions 25 on the inner circumferential side of the brake disc 100. The convex portions 25 do not protrude into the ventilation passages. Therefore, the convex portions 25 do not cause to substantially reduce the sectional areas of the ventilation passages on the inner circumferential side of the brake disc 100. That is, the air inlet planes of the ventilation passages are not shrunk by the convex portions 25, and good ventilation properties between the brake disc 100 and the rotary member can be kept. Therefore, the heat capacity of the brake disc 100 can be increased while the excellent cooling performance of the brake disc 100 is maintained. In addition, surface areas of the fins 20 can be expanded by the convex portions 25. Thus, the cooling performance of the brake disc 100 on the inner circumferential side can be further improved.

In the present embodiment, the projections 13 are formed over the entire back surface 12 of the disc body 10. Accordingly, the surface area of the back surface 12 can be expanded as a whole, and a heat transfer coefficient of the entire back surface 12 can be raised. Therefore, the cooling performance of the brake disc 100 can be further improved.

In the present embodiment, in each fin 20, the grooves 23 and 24 that traverse the fin 20 are formed. The edge portions and wall surfaces of the grooves 23 and 24 cause pressure losses in air flowing through the ventilation passages, slightly reducing the flow rates of ventilation in the ventilation passages. As a result, occurrence of aerodynamic noise in braking can be suppressed. At the same time, the grooves 23 and 24 can expand the surface areas of the fin 20. Additionally, the grooves 23 and 24 can cause separation of flows of air to occur at edge portions of the grooves 23 and 24, thus making the thermal boundary layer thinner. This accelerates the cooling of the brake disc 100 in braking. That is, the grooves 23 and 24 can also contribute to improvement of the cooling performance of the brake disc 100.

In the present embodiment, all the fins 20 have the grooves 23 and 24. However, the grooves 23 and 24 are not essential components for the fins 20. Some or all of the fins 20 need not have the grooves 23 and 24. For example, the grooves 23 and 24 can be formed in only fins 20 provided with the bolt holes 22 on both sides of the bolt holes 22. The fins 20 provided with the bolt holes 22 may not have the grooves 24 on the inner side in the radial direction while having the grooves 23 on the outer side in the radial direction.

In the present embodiment, the back surface 12 of the disc body 10 is inclined with respect to the front surface 11 in a radial section of the brake disc 100. The back surface 12 is configured to gradually approach the front surface 11 as the back surface 12 extends toward the inner circumferential edge 122. This gradually shrinks sectional areas of the ventilation passages formed between the disc body 10 and the rotary member, without a sharp change, as the ventilation passages extend from the inner side toward the outer side in the radial direction. Accordingly, the flow rates of ventilation in the ventilation passages can be kept sufficiently without production of significant pressure losses in air in the ventilation passages. Therefore, the cooling performance of the brake disc 100 can be further improved.

The back surface 12 of the disc body 10 being inclined in such a manner as to approach the front surface 11 as the back surface 12 extends toward the inner circumferential edge 122 increases the heights of the fins 20 on the inner circumferential side of the brake disc 100. That is, the surface areas of the fins 20 are expanded on the inner circumferential side of the brake disc 100. Therefore, the cooling of the brake disc 100 on the inner circumferential side can be accelerated.

Note that the entire back surface 12 of the disc body 10 need not be a single inclined surface. For example, the back surface 12 may be constituted by an inclined surface and a convex surface or may be constituted by a concave surface and a convex surface. It suffices that the disc body 10 is made substantially thin as a whole as the disc body 10 extends inward in the radial direction. A shape of the back surface 12 is not limited to a particular shape.

Embodiments according to the present disclosure are described above, but the present disclosure is not limited to the above embodiments, and various modifications can be made without departing the scope of the present disclosure.

### EXAMPLE

The present disclosure will be described below in more detail with Examples. Note that the present disclosure is not limited to the following Examples.

To examine the effects provided by the brake disc for a railway vehicle according to the present disclosure, general-purpose thermal-fluid analysis software (product name: ANSYS Fluent, from ANSYS, Inc.) was used to conduct a three-dimensional thermal-fluid analysis assuming that a railway vehicle is traveling at a constant speed of 360 km/h. Basic specifications of a brake disc used in the thermal-fluid analysis are as follows.

### <Basic Specifications>

- Forged steel brake disc for Shinkansen
- Inner diameter of disc body: 466 mm
- Outer diameter of disc body: 722 mm
- Length of fin in radial direction: 128 mm
- Bolt holes: Disposed such that their centers are positioned on a circumference of a circle with a diameter of 585 mm

As an evaluation index that indicates a cooling performance of the brake disc, a heat dissipation performance index was used. The heat dissipation performance index is a value of the product of an average heat transfer coefficient of a surface of the disc and a surface area of the disc (in traveling at a constant speed of 360 km/h, per brake disc). A higher heat dissipation performance index means a higher cooling performance of the brake disc.

As an evaluation index that indicates a level of aerodynamic noise, a flow rate of ventilation was used. The flow rate of ventilation is a flow rate of ventilation between the brake disc and a wheel (rotary member) in traveling at a constant speed of 360 km/h. As described in International Application Publication No. WO2010/071169, there is a strong correlation between a flow rate of ventilation between a brake disc and a wheel, and a level of aerodynamic noise. For this reason, a flow rate of ventilation (per unit time) obtained by the thermal-fluid analysis was used as the index for evaluating the level of aerodynamic noise. A larger flow rate of ventilation can be considered as a higher level of aerodynamic noise.

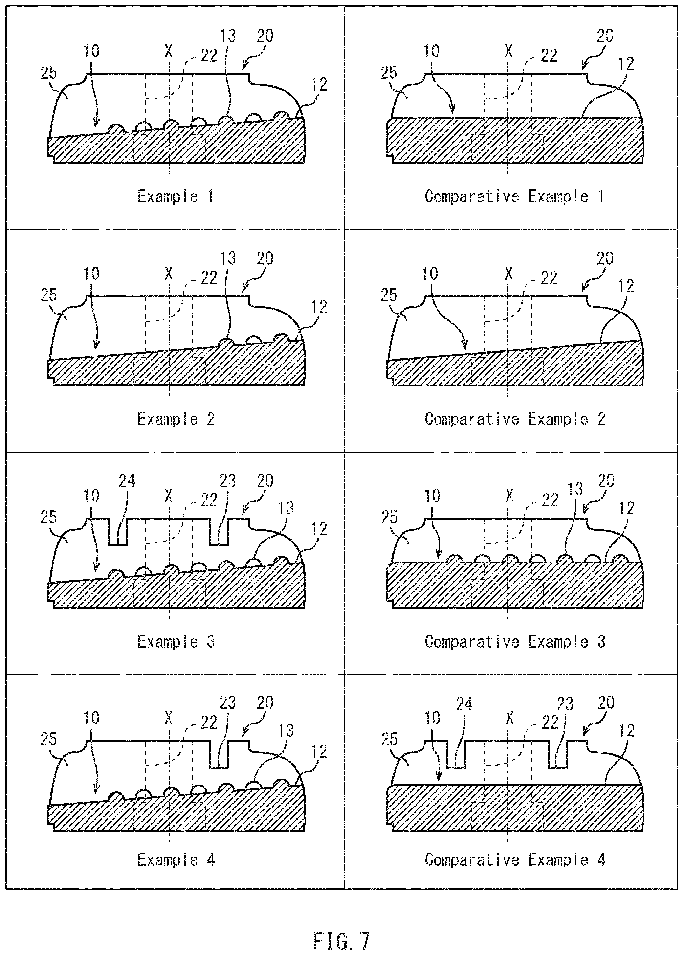

FIG. 7 is a schematic diagram illustrating radial sections of models used in the thermal-fluid analysis. In models in Examples 1 to 4, their disc bodies 10 are made thin as a whole as the disc bodies 10 extend inward in the radial direction, and their fins 20 are each provided with a convex portion 25, as with the brake disc 100 according to the embodiment described above. In the model in Example 1, projections 13 are provided over the entire back surface 12 of its disc body 10. In the model in Example 2, projections 13 are provided only in a region of its back surface 12 outward from its bolt holes 22 in the radial direction. In the model in Example 3, projections 13 are provided over its entire back surface 12, and grooves 23 and 24 are provided on both sides of a bolt hole 22 of each of its fins 20. In the model in Example 4, projections 13 are provided over its entire back surface 12, and only a groove 23 outward in the radial direction is provided in each of its fins 20.

In models in Comparative Examples, a convex portion 25 is provided in each of their fins 20 as in Examples. In the models in Comparative Examples 1, 3, and 4, their disc bodies 10 each have a substantially constant thickness across the disc bodies 10. In the model in Comparative Example 3, a back surface 12 of its disc body 10 is provided with projections 13, but its fins 20 are not provided with grooves 23 and 24. In the model in Comparative Example 4, its fins 20 are each provided with grooves 23 and 24, but its back surface 12 is not provided with projections 13. In the model in Comparative Example 2, while its entire disc body 10 is made thin as the disc body 10 extends inward in the radial direction, projections 13 are not formed on its back surface 12.

In Examples 1 to 4 and Comparative Example 2, angles α of back surfaces 12 of their disc bodies 10 (FIG. 3) were set to 5°. In Examples and Comparative Examples, thicknesses t1 of their disc bodies 10 at their outer circumferential edges 121 (FIG. 3) are the same.

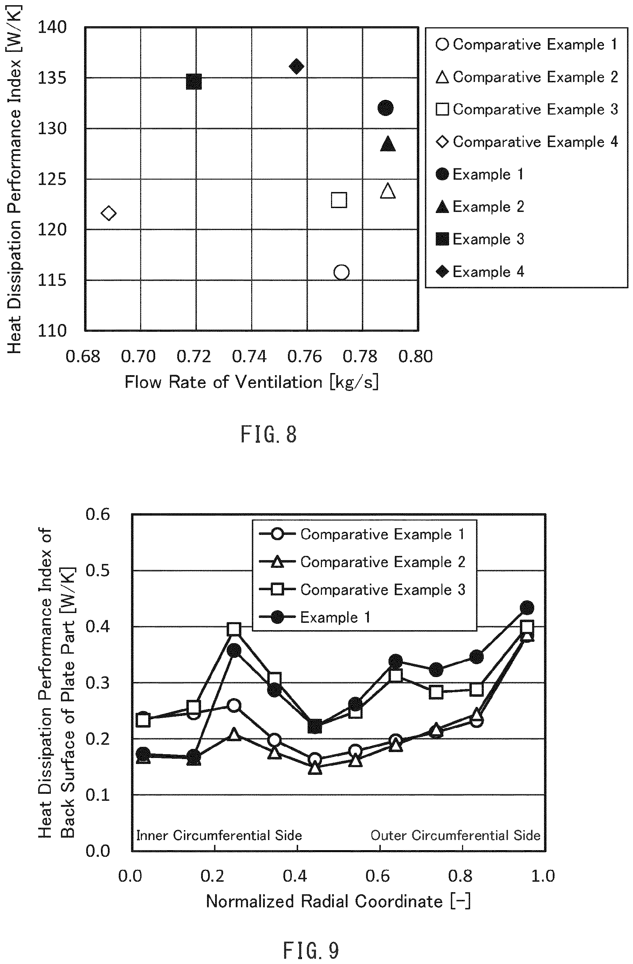

FIG. 8 is a graph illustrating a relation between the flow rate of ventilation obtained by the thermal-fluid analysis and the heat dissipation performance index for each model. As illustrated in FIG. 8, the heat dissipation performance indices of the models in Examples 1 to 4 were significantly higher than the heat dissipation performance indices of the models in Comparative Examples 1 to 4. From the result, it can be said that a cooling performance of the brake disc can be improved by making the entire disc body 10 thin as the disc body 10 extends inward in the radial direction and by providing the projections 13 in at least a region of the back surface 12 outward from the bolt holes 22 in the radial direction.

The heat dissipation performance index of the model in Example 1 is higher than the heat dissipation performance index of the model in Example 2. That is, the cooling performance of the brake disc can be further improved by providing the projections 13 over the entire back surface 12 of the disc body 10.

The heat dissipation performance indices of the models in Examples 3 and 4 are even higher than the heat dissipation performance index of the model in Example 1. The flow rates of ventilation of the models in Examples 3 and 4 are smaller than the flow rates of ventilation of the models in Examples 1 and 2. Therefore, providing the fins 20 with the groove 23 or the grooves 23 and 24 enables further improvement of the cooling performance of the brake disc and reduction of aerodynamic noise.

Example 3, in which the grooves 23 and 24 were provided on both sides of the bolt holes 22, resulted in the smallest flow rate of ventilation. Therefore, providing the fins 20 with the grooves 23 and 24 on both the outer circumferential sides and the inner circumferential sides of the bolt holes 22 can be considered to be particularly effective for the reduction of aerodynamic noise.

FIG. 9 is a graph illustrating a relation between a normalized radial coordinate on the back surface 12 of the disc body 10 and the heat dissipation performance index for each of the models in Example 1 and Comparative Examples 1 to 3. In the graph in FIG. 9, heat dissipation performance indices of the back surface 12 at a plurality of normalized radial coordinates were plotted for each model. The normalized radial coordinate is a distance from the inner circumferential edge 122 of the back surface 12 in the radial direction that is normalized by dividing the distance by a length of the back surface 12 in the radial direction.

As illustrated in FIG. 9, the heat dissipation performance index of the back surface 12 on the outer circumferential side little differs between Comparative Example 1 and Comparative Example 2. It is therefore understood that only making the disc body 10 thin as the disc body 10 extends inward in the radial direction does not improve the heat dissipation performance index of the disc body 10 on the outer circumferential side, thus not accelerating the cooling of the outer circumferential portion of the disc body 10.

In Comparative Example 3, the projections 13 being present on the back surface 12 made the heat dissipation performance index of the back surface 12 on the outer circumferential side slightly higher than in Comparative Examples 1 and 2. However, in Example 1, the heat dissipation performance index of the back surface 12 on the outer circumferential side is even higher than in Comparative Example 3. It therefore can be said that making the entire disc body 10 thin as the disc body 10 extends inward in the radial direction and providing the projections 13 on the back surface 12 produce a combined effect of pronouncedly accelerating cooling of the outer circumferential portion of the back surface 12.

The heat dissipation performance index of the back surface 12 on the inner circumferential side is lower in Example 1 than in Comparative Examples 1 and 3. However, in Example 1, the inclination of the back surface 12 increases the heights and the surface areas of the fins 20 on the inner circumferential side. Accordingly, the cooling performance of the brake disc on the inner circumferential side can be kept. Therefore, in Example 1, no rise in the heat dissipation performance index of the back surface 12 on the inner circumferential side is not particularly problematic.

### REFERENCE SIGNS LIST

100: brake disc
10: disc body
11: front surface
12: back surface
122: inner circumferential edge
13: projection
20: fin
21: top surface
22: bolt hole
23, 24: groove
25: convex portion

## Claims

1. A brake disc for a railway vehicle, comprising:
a disc body that has a front surface and a back surface, the disc body being annular and decreasing in thickness as the disc body extends inward in a radial direction; and
a plurality of fins that are radially disposed on the back surface, at least one of the fins having a bolt hole at a central portion of the fin in the radial direction, wherein
the disc body includes a plurality of projections that are formed on a portion of the back surface, the portion being positioned outward from the bolt hole in the radial direction, and
the fins each include:
a top surface that extends in the radial direction; and
a convex portion that, as viewed in a section of the brake disc cut in the radial direction, protrudes inward in the radial direction from an imaginary plane passing an end portion of the top surface and an inner circumferential edge of the back surface, the end portion being one of both end portions of the top surface, whichever is positioned inward in the radial direction.

2. The brake disc according to claim 1, wherein the projections are formed over the entire back surface.

3. The brake disc according to claim 1 or 2, wherein the fin having the bolt hole includes a first groove that is disposed outward from the bolt hole in the radial direction and traverses the fin.

4. The brake disc according to claim 3, wherein the fin having the bolt hole further includes a second groove that is disposed inward from the bolt hole in the radial direction and traverses the fin.

5. The brake disc according to any one of claims 1 to 4, wherein the back surface is inclined with respect to the front surface in such a manner as to approach the front surface as the back surface extends toward the inner circumferential edge as viewed in the section of the brake disc.
